(19) Europäisches Patentamt / European Patent Office / Office européen des brevets

(11) **EP 2 221 591 B1**

(12) **FASCICULE DE BREVET EUROPEEN**

(45) Date de publication et mention de la délivrance du brevet:
**20.05.2020 Bulletin 2020/21**

(51) Int Cl.:
**G01G 23/01** *(2006.01)* **G01G 19/12** *(2006.01)*

(21) Numéro de dépôt: **10153836.1**

(22) Date de dépôt: **17.02.2010**

(54) **Remorque dotée d'un dispositif de pesée embarqué, et procédé de pesée correspondant**

Anhänger, der mit einer eingebauten Wiegevorrichtung ausgestattet ist, und entsprechendes Wiegeverfahren

Trailer provided with an on-board weighing device and corresponding weighing method

(84) Etats contractants désignés:
AT BE BG CH CY CZ DE DK EE ES FI FR GB GR HR HU IE IS IT LI LT LU LV MC MK MT NL NO PL PT RO SE SI SK SM TR

(30) Priorité: **20.02.2009 FR 0951110**

(43) Date de publication de la demande:
**25.08.2010 Bulletin 2010/34**

(73) Titulaire: **SOCIETE D'ETUDES, DE RECHERCHES ET D'APPLICATIONS**
**51200 Epernay (FR)**

(72) Inventeurs:
- **Lekeux, Olivier**
  **59553, CUINCY (FR)**
- **Venel, Sébastien**
  **62113, LABOURSE (FR)**
- **Theron, Maxime**
  **59231, VILLERS PLOUICH (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
WO-A-89/04950 WO-A-2004/099737
FR-A- 2 292 958 FR-A- 2 554 923
GB-A- 1 281 641 GB-A- 2 191 001
US-A- 3 650 340 US-A- 4 842 085

- Www Analog: "A Designer's Guide to Instrumentation Amplifiers 3 RD Edition", , 31 December 2006 (2006-12-31), XP055173156, Retrieved from the Internet: URL:http://www.analog.com/media/en/trainin g-seminars/design-handbooks/58127566743127 78737Complete_In_Amp.pdf [retrieved on 2015-03-03]
- National Instruments Corporation: "Application Note 078 Strain Gauge Measurement - A Tutorial", Appliaction Note 078, 1 August 1998 (1998-08-01), pages 1-12, XP055573680, Retrieved from the Internet: URL:http://elektron.pol.lublin.pl/users/EL EKP/ap_notes/NI_AN078_Strain_Gauge_Meas.p d f [retrieved on 2019-03-25]
- James Karki: "Application Report Signal Conditioning Wheatstone Resistive Bridge Sensors", , 1 January 1999 (1999-01-01), XP055588654, Retrieved from the Internet: URL:http://www.ti.com/lit/an/sloa034/sloa0 34.pdf [retrieved on 2019-05-14]

EP 2 221 591 B1

## Description

L'invention concerne, de façon générale, le domaine de la métrologie.

Plus précisément, l'invention concerne, selon un premier de ses aspects, une remorque dotée d'une structure porteuse comprenant une flèche et au moins un premier essieu, cette remorque étant conçue pour transporter un chargement présentant un centre de gravité.

Selon la technique traditionnelle, la pesée du chargement d'une telle remorque est réalisée au moyen d'une bascule installée à demeure sur un site de pesage.

Cette opération ne peut donc être réalisée que sur ce site et sous réserve de disponibilité de la bascule, ce qui représente une contrainte gênante en de multiples occasions.

On connaît par ailleurs, notamment par le brevet FR 2 292 958 et par le brevet US 5 410 109, des remorques équipées de dispositifs de pesée embarqués permettant d'en évaluer la charge en tout lieu.

Cependant, non seulement ces dispositifs de pesée embarqués sur une remorque obligent à doter cette remorque d'une structure particulière, parfois même d'une structure complexe à deux châssis, mais en outre ces dispositifs ne sont pas conçus pour pouvoir s'adapter à une remorque existante.

L'invention, qui se situe dans ce contexte, a notamment pour but de lever les contraintes précédemment évoquées.

A cette fin, la remorque de l'invention, par ailleurs conforme à la définition générique qu'en donne le préambule ci-dessus, est essentiellement caractérisée en ce qu'elle comprend au moins deux extensomètres, des liaisons en nombre égal au nombre d'extensomètres, et une unité de traitement de signaux reliée aux extensomètres par les liaisons respectives, en ce que les extensomètres sont directement disposés sur la structure porteuse et occupent des positions dont les projections verticales dans un plan horizontal forment un repère barycentrique pour la projection verticale, dans ce plan horizontal, du centre de gravité de l'ensemble de la structure porteuse et du chargement, en ce que les extensomètres sont conçus pour fournir à l'unité de traitement des signaux de sortie respectifs dont chacun est représentatif d'une déformation de la structure, et en ce que l'unité de traitement est conçue pour fournir une donnée représentative du poids de la remorque et / ou du chargement, cette donnée étant obtenue au moins par combinaison des signaux de sortie des extensomètres, reçus à travers lesdites liaisons.

Dans son mode de réalisation le plus élémentaire, cette remorque comprend deux extensomètres dont les projections dans le plan horizontal sont en alignement avec la projection du centre de gravité de l'ensemble de la structure porteuse et du chargement, et disposées de part et d'autre de la projection de ce centre de gravité.

Dans un autre mode de réalisation possible, moins sensible aux éventuels déplacements du centre de gravité de l'ensemble de la structure porteuse et du chargement, cette remorque comprend au moins trois extensomètres.

L'un au moins des extensomètres peut être disposé sur la flèche de cette remorque.

En variante, ou de façon cumulative, au moins deux des extensomètres peuvent être disposés chacun sur un essieu de cette remorque, éventuellement à raison de deux extensomètres par essieu.

Chacune desdites liaisons comprend par exemple un circuit électronique de décalage d'offset et d'amplification à gain ajustable.

Dans ce cas, le signal de sortie de chaque extensomètre peut être un signal analogique, le circuit électronique de chacune desdites liaisons pouvant alors être un circuit analogique, et ladite unité de traitement pouvant comprendre un calculateur relié à chaque circuit analogique par un étage d'entrée doté d'un convertisseur analogique / numérique.

L'invention concerne également un procédé de pesée d'un chargement porté par une remorque telle que précédemment définie, ce procédé étant caractérisé en ce qu'il comprend une étape préalable de calibration, une étape de tarage, une étape de pesée de la remorque pleine, et une étape d'élaboration d'une donnée finale représentative du poids du chargement, en ce que ladite combinaison des signaux de sortie comprend une combinaison linéaire, en ce que l'étape de calibration comprend au moins une opération consistant à déterminer des coefficients de pondération des signaux de sortie dans ladite combinaison linéaire, en ce que l'étape de tarage comprend au moins une opération consistant à déterminer une première valeur de ladite combinaison linéaire, obtenue pour la remorque vide, en ce que l'étape de pesée de la remorque pleine comprend au moins une opération consistant à déterminer une deuxième valeur de ladite combinaison linéaire, obtenue pour la remorque avec son chargement, et en ce que l'étape d'élaboration de la donnée finale comprend au moins une opération consistant à fournir, comme représentative du poids du chargement, la différence entre la deuxième valeur et la première valeur de ladite combinaison linéaire.

Dans un mode de mise en œuvre préféré de ce procédé, ladite étape de calibration comprend les opérations consistant à :

(a) relever des valeurs initiales des différents signaux de sortie des extensomètres, obtenues pour la remorque vide;

(b) placer dans la remorque, sur ou à proximité de la verticale d'un extensomètre, une charge de référence et relever les valeurs des différents signaux de sortie des extensomètres, obtenues pour cette position de la charge de référence;

(c) répéter l'opération (b) pour chaque extensomètre;

(d) résoudre un système d'équations comprenant autant d'équations que d'extensomètres, les différentes équations correspondant aux différentes positions de la charge de référence, chaque équation assimilant à cette charge de référence la différence entre deux combinaisons linéaires dont la première est obtenue avec la charge de référence et dont la seconde est obtenue pour la remorque vide, chaque combinaison linéaire utilisant, en tant que variables à déterminer, les coefficients de pondération des différents extensomètres, et étant formée par la somme des produits des coefficients de pondération des différents extensomètres par les valeurs respectives des différents signaux de sortie de ces extensomètres.

Dans un mode de mise en œuvre simplifié de ce procédé de pesée, ladite étape de calibration comprend les opérations consistant à :

(a') relever des valeurs à vide des différents signaux de sortie des extensomètres, obtenus pour la remorque vide;

(b') placer dans la remorque une charge de référence sur la verticale de la position qu'occupe le centre de gravité de l'ensemble de la structure porteuse et du chargement dans les conditions nominales de chargement de la remorque, et relever les valeurs en charge des différents signaux de sortie des extensomètres, obtenus avec cette charge de référence;

(c') calculer, en tant que facteur normatif, le quotient de la charge de référence par la différence entre la somme des valeurs en charge des signaux de sortie des extensomètres et la somme des valeurs à vide des signaux de sortie de ces extensomètres; et

(d') adopter, comme représentant chacune des première et deuxième valeurs de ladite combinaison linéaire, le produit, par le facteur normatif, de la somme des valeurs des signaux de sortie des extensomètres, respectivement obtenus pour la remorque vide et pour la remorque avec son chargement.

D'autres caractéristiques et avantages de l'invention ressortiront clairement de la description qui en est faite ci-après, à titre indicatif et nullement limitatif, en référence aux dessins annexés, dans lesquels :

- la figure 1 est un schéma illustrant un dispositif de pesée installé sur une remorque conforme à un mode de réalisation possible de l'invention;
- les figures 2A et 2B sont des vues schématiques, respectivement de côté et de dessus, de la structure porteuse d'une remorque équipée du dispositif illustré à la figure 1;
- la figure 3 est une vue schématique en perspective d'une remorque, cette vue illustrant des conditions limites à respecter pour la pesée;
- les figures 3A à 3C sont des vues schématiques de dessus d'une remorque conforme à l'invention, observée pendant les différentes phases d'une étape de calibration conforme à un mode de mise en œuvre préféré du procédé de l'invention;
- la figure 5A est une vue de dessus de la structure porteuse d'une remorque conforme à un autre mode de réalisation possible de l'invention; et
- la figure 5B est une vue schématique de dessus de la remorque illustrée à la figure 5A et observée pendant les différentes phases d'une étape de calibration conforme au mode de mise en œuvre préféré du procédé de l'invention.

Comme annoncé précédemment, l'invention concerne une remorque comportant une structure porteuse et conçue pour transporter un chargement, l'ensemble de cette structure porteuse et de ce chargement présentant un centre de gravité G, typiquement confondu avec le centre de gravité de la structure seule ou très voisin de ce dernier.

La structure porteuse 1 est essentiellement constituée de poutres métalliques et comprend notamment une flèche 10 ainsi qu'un ou plusieurs essieux tels que 11 et 12.

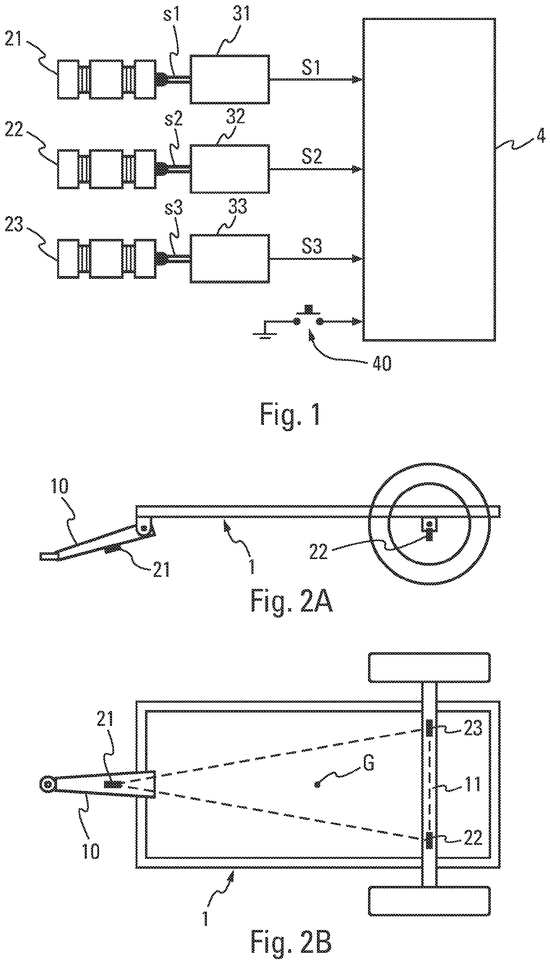

Selon l'invention, cette remorque est équipée d'un dispositif de pesée embarqué comprenant (figure 1) des extensomètres tels que 21 à 23, en nombre au moins égal à deux, des liaisons telles que 31 à 33, en nombre égal au nombre d'extensomètres, et une unité 4 de traitement de signaux respectivement reliée aux extensomètres par ces liaisons.

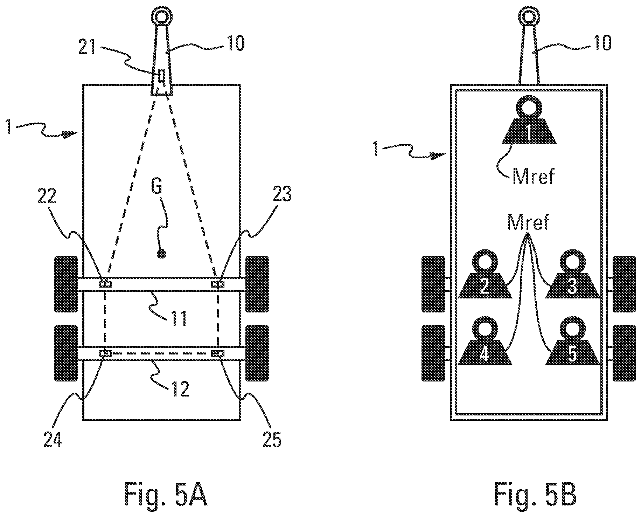

Les extensomètres, référencés 21 à 23 sur la figure 2B et 21 à 25 sur la figure 5A, sont directement disposés sur la structure 1, et éventuellement montés sur cette structure après fabrication de la remorque, de manière à fournir à l'unité de traitement 4 des signaux de sortie respectifs dont chacun est représentatif d'une déformation de la structure 1, cette déformation pouvant consister en un allongement ou en une compression élastiques.

Concrètement, les signaux de sortie bruts, tels que s1, s2 et s3, que délivrent les différents extensomètres, peuvent être de nature analogique et peuvent en outre subir un prétraitement de la part des liaisons respectives 31 à 33, dont chacune comprend de préférence un circuit électronique d'amplification et de décalage d'offset, adapté à la nature analogique des signaux s1 à s3.

Dans ces conditions, les signaux reçus par l'unité de traitement 4 en provenance des extensomètres 21 à 23 et référencés S1, S2, et S3, sont différents des signaux bruts s1 à s3 délivrés par les extensomètres 21 à 23.

Néanmoins, dans la mesure où le traitement appliqué par les liaisons 31 à 33 aux différents signaux bruts s1 à s3 est totalement connu, l'appellation de "signaux de sortie des extensomètres" sera ici considérée comme indifféremment applicable aux signaux bruts s1 à s3 et aux signaux prétraités SI à S3.

Par ailleurs, dans le cas où les signaux prétraités SI à S3 sont encore de nature analogique, l'unité de traitement 4, qui est essentiellement constituée par un calculateur, comprend en outre un étage d'entrée doté d'un convertisseur analogique / numérique et d'un multiplexeur reliant ce calculateur au circuit analogique de chacune des liaisons 31 à 33, de sorte que l'appellation de "signaux de sortie des extensomètres" sera ici considérée comme également applicable aux valeurs numériques issues de la conversion analogique / numérique des signaux prétraités SI à S3.

De préférence, chaque extensomètre est sensible aussi bien aux déformations élastiques résultant d'une traction qu'aux déformations élastiques résultant d'une compression, de telle manière que chaque signal prétraité, tel que SI à S3, produit pour des déformations de même amplitude et de sens différents, prend des valeurs respectives présentant la même amplitude et des signes opposés.

Par ailleurs, le circuit d'amplification et de décalage d'offset contenu dans chacune des liaisons 31 à 33 présente très avantageusement un gain ajustable. Il est ainsi possible, en choisissant des gains différents pour les différents signaux prétraités tels que SI à S3, de privilégier l'un au moins de ces signaux en augmentant la contribution de ce signal dans l'élaboration du résultat final de la pesée, ou au contraire d'en réduire l'importance, de manière à augmenter la précision de la pesée en fonction de la géométrie de la structure porteuse et de la distribution des extensomètres.

Les extensomètres tels que 21 à 25 sont disposés sur la structure porteuse 1 de la remorque de manière à occuper des positions dont les projections verticales dans un plan horizontal forment un repère barycentrique pour la projection verticale, dans ce plan horizontal, du centre de gravité G de l'ensemble de la structure porteuse et du chargement de cette remorque dans ses conditions nominales de chargement.

Exprimée autrement, cette propriété de disposition des extensomètres signifie qu'il existe des nombres scalaires positifs ou négatifs, en nombre égal au nombre d'extensomètres, et tels que la projection verticale du centre de gravité G de l'ensemble de la structure porteuse et du chargement de la remorque sur le plan horizontal est le barycentre des projections verticales, sur ce plan horizontal, des positions des extensomètres, affectées de poids respectifs égaux à ces nombres scalaires.

Comme les figures 2B et 5A sont des vues de dessus, le plan horizontal est constitué par le plan de la feuille contenant chacune de ces figures, et les points repérés par les références G et 21 à 25 sont respectivement les traces, sur le plan horizontal, des projections verticales du centre de gravité G de l'ensemble de la structure porteuse et du chargement de la remorque et des positions des différents extensomètres.

Ainsi, les figures 2B et 5A montrent notamment que, dans le cas d'utilisation de trois extensomètres ou plus, les projections dans le plan horizontal des positions de ces extensomètres forment les sommets d'un polygone (un triangle sur la figure 2B et un pentagone sur la figure 5A).

Même si, dans la plupart des cas, la position la plus naturelle des extensomètres sera telle que la projection, dans ce plan horizontal, du centre de gravité G de la structure porteuse et du chargement se trouve à l'intérieur de ce polygone, l'invention pourra tout aussi bien être mise en œuvre dans le cas où la projection de ce centre de gravité se trouve à l'extérieur de ce polygone.

Dans le cas (non illustré) où seulement deux extensomètres sont utilisés, les projections de ces extensomètres dans le plan horizontal sont alignées sur la projection du centre de gravité G de l'ensemble de la structure porteuse et du chargement, et disposées de part et d'autre de la projection de ce centre de gravité G.

Comme le montrent les figures 2A, 2B, et 5A, l'un des extensomètres, référencé 21, peut être disposé sur la flèche 10 de la remorque, par exemple sur la face inférieure de cette flèche pour travailler en extension.

Chacun des essieux, tels que 11 et 12, de la remorque peut en outre recevoir un ou deux extensomètres sous réserve de respect des conditions de disposition précédemment énoncées.

Dans le mode de réalisation illustré à la figure 2B, la remorque comporte, en plus de l'extensomètre 21 disposé sur la flèche 10, deux extensomètres 22 et 23 disposés sur l'essieu 11, symétriquement par rapport au plan longitudinal médian et vertical de la structure porteuse 1.

Néanmoins, dans la mesure où la flèche 10, le milieu de l'essieu 11 et le centre de gravité G de l'ensemble de la structure porteuse et du chargement se trouvent dans le plan vertical médian de la structure porteuse 1, il serait possible de remplacer les deux extensomètres 22 et 23 par un extensomètre unique disposé au milieu de l'essieu 11.

Dans le mode de réalisation illustré à la figure 5A, la remorque comporte, en plus de l'extensomètre 21 disposé sur la flèche 10, deux extensomètres 22 et 23 disposés sur la face inférieure de l'essieu 11, symétriquement par rapport au plan vertical médian de la structure porteuse 1, et deux extensomètres 24 et 25 disposés sur la face inférieure de l'essieu 12, également de manière symétrique par rapport au plan vertical médian de la structure porteuse 1.

Néanmoins, dans ce dernier mode de réalisation, l'écartement entre les extensomètres 24 et 25 pourrait être différent de l'écartement entre les extensomètres 22 et 23.

Il serait en outre possible :

- de se dispenser des extensomètres de l'un des essieux; ou

- de se dispenser, sur des côtés différents de la remorque, d'un extensomètre sur chaque essieu, en ne gardant par exemple que les extensomètres 22 et 25 ou 23 et 24; ou même
- de ne garder, à la place des extensomètres 22 à 25, qu'un extensomètre unique disposé au milieu de l'un des essieux 11 et 12.

En pratique cependant, le nombre d'extensomètres utilisés dépend à la fois de la nature du chargement que la remorque est destinée à recevoir, et de la précision souhaitée pour la pesée, la précision étant d'autant meilleure que le nombre d'extensomètres utilisés est élevé.

En particulier, si le chargement de la remorque est de nature hétérogène en densité et / ou dans sa répartition volumique sur la remorque, la position du centre de gravité G de ce chargement est nécessairement entachée d'incertitude, de sorte que plus rien n'assure, dans le cas où seulement deux extensomètres sont utilisés, que les projections verticales, dans le plan horizontal, des extensomètres et du centre de gravité de l'ensemble de la structure porteuse et du chargement soient toujours alignées.

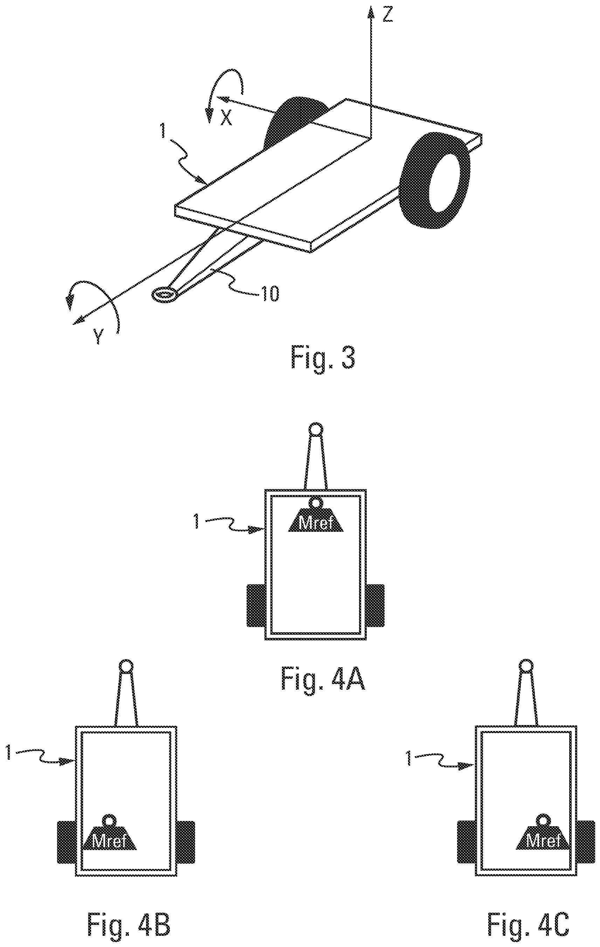

Le déplacement de la projection verticale du centre de gravité G peut aussi résulter d'un tangage de la remorque, c'est-à-dire d'un basculement autour de son axe transversal X (figure 3) ou d'un roulis de cette remorque, c'est-à-dire d'un basculement autour de son axe longitudinal Y.

L'unité de traitement 4 est conçue pour élaborer une combinaison linéaire des signaux de sortie, tels que SI à S3, qu'elle reçoit des différents extensomètres tels que 21 à 23 à travers les liaisons respectives telles que 31 à 33, et pour fournir, à partir de cette combinaison linéaire ou de plusieurs valeurs de cette combinaison linéaire, une donnée représentative du poids de la remorque et / ou du poids Mq du chargement de cette remorque.

Le procédé mis en œuvre pour atteindre ce résultat comprend plusieurs étapes, et notamment une étape préalable de calibration, une étape de tarage, et une étape de pesée de la remorque pleine.

Compte tenu des remarques formulées ci-dessus en référence à la figure 3, toutes ces étapes sont très préférablement mises en œuvre en respectant la condition que la remorque soit attelée, qu'elle soit située sur un plan d'appui horizontal pour n'avoir ni roulis ni tangage, et qu'aucune contrainte mécanique ne soit exercée sur les roues de cette remorque.

La présente description utilisera désormais les conventions d'écriture suivantes :

- "Si" désigne de façon générique les signaux de sortie des différents extensomètres, et donc notamment les signaux S1, S2, et S3;
- "Ki" désigne de façon générique des coefficients de pondération qui, dans la combinaison linéaire exploitée dans l'unité de traitement 4, sont des facteurs appliqués aux signaux Si; Ki désigne donc notamment, de façon générique, un coefficient de pondération K1 appliqué au signal S1, un coefficient de pondération K2 appliqué au signal S2, et un coefficient de pondération K3 appliqué au signal S3;

- "Mref" désigne une charge de référence, de poids connu;
- "Mq" désigne le poids, à déterminer, du chargement de la remorque non vide, cette remorque étant alors considérée comme "pleine" quelle que soit la possibilité, ou non, de la remplir davantage;
- l'indice "o" se réfère à des conditions de mesure dans lesquelles la remorque est vide;
- l'indice "q" se réfère à des conditions de mesure dans lesquelles la remorque est dite "pleine";
- l'indice "r1" se réfère à des conditions de mesure dans lesquelles la remorque porte la charge de référence Mref placée dans une position portant le numéro 1;
- l'indice "r2" se réfère à des conditions de mesure dans lesquelles la remorque porte la charge de référence Mref placée dans une position portant le numéro 2;
- l'indice "r3" se réfère à des conditions de mesure dans lesquelles la remorque porte la charge de référence Mref placée dans une position portant le numéro 3;
- l'indice "rg" se réfère à des conditions de mesure dans lesquelles la remorque porte une charge de référence Mref placée sur la verticale du centre de gravité G de l'ensemble de la structure porteuse et du chargement que la remorque peut transporter dans ses conditions nominales de chargement;
- "n" désigne de façon générique le nombre d'extensomètres utilisés; et
- le symbole $\sum$ désigne l'opérateur "Somme de".

L'étape de calibration comprend des opérations permettant de déterminer les coefficients de pondération Ki qui seront affectés aux signaux de sortie Si dans la combinaison linéaire exploitée par l'unité de traitement 4.

Dans le mode de réalisation préféré de l'invention, cette étape de calibration comprend les opérations ci-après repérées par les références (a) à (d) :

L'opération (a) consiste à relever les valeurs Sio, dites "initiales", que prennent les différents signaux de sortie des extensomètres lorsque la remorque est vide. Cette opération conduit donc par exemple à l'obtention de valeurs S1o, S2o, et S3o dans le cas du mode de réalisation de la figure 2B, et à l'obtention de valeurs S1o, S2o, S3o, S4o, et S5o dans le cas du mode de réalisation de la figure 5A. Dans la mesure où cette opération implique le stockage, dans une mémoire de l'unité de traitement 4 et en tant que valeurs initiales, des valeurs des signaux Si des différents extensomètres, l'unité de traitement 4 dispose d'une entrée, symbolisée sur la figure 1 sous la forme d'un bouton-poussoir 40, dont l'actionnement permet de déclencher cette mise en mémoire sélective.

L'opération (b) consiste à placer dans la remorque, sur ou à proximité de la verticale d'un premier extensomètre tel que 21, la charge de référence Mref, et à relever les valeurs Sir1 prises par les signaux de sortie des différents extensomètres pour cette position de la charge de référence Mref. Cette première position est par exemple celle qu'illustre la figure 4A dans le mode de réalisation de la figure 2B, et celle qu'illustre par le chiffre "1" la figure 5B dans le mode de réalisation de la figure 5A. Cette opération conduit donc à l'obtention de valeurs S1r1, S2r1, et S3r1 dans le cas du mode de réalisation de la figure 2B, et à l'obtention de valeurs S1r1, S2r1, S3r1, S4r1, et S5r1 dans le cas du mode de réalisation de la figure 5A.

L'opération (c) consiste à répéter l'opération (b) pour chaque extensomètre. L'opération (b) est donc mise en œuvre en plaçant la charge de référence Mref dans la position qu'illustre la figure 4B dans le mode de réalisation de la figure 2B, et celle qu'illustre par le chiffre "2" la figure 5B dans le mode de réalisation de la figure 5A, puis dans la position qu'illustre la figure 4C dans le mode de réalisation de la figure 2B, et celle qu'illustre par le chiffre "3" la figure 5B dans le mode de réalisation de la figure 5A, les opérations suivantes ne concernant plus que ce dernier mode de réalisation et étant du même type. Dans le cas du mode de réalisation de la figure 2B, l'opération (c) conduit donc à l'obtention de valeurs S1r2, S2r2, et S3r2, puis des valeurs S1r3, S2r3, et S3r3. Dans le cas du mode de réalisation de la figure 5A, l'opération (c) conduit successivement à l'obtention de valeurs S1r2, S2r2, S3r2, S4r2, et S5r2, puis des valeurs S1r3, S2r3, S3r3, S4r3, et S5r3, puis des valeurs S1r4, S2r4, S3r4, S4r4, et S5r4, et enfin des valeurs S1r5, S2r5, S3r5, S4r5, et S5r5.

L'opération (d) consiste à résoudre un système d'équations utilisant les valeurs obtenues précédemment et de la forme :

$$Mref = \Sigma(Ki.Sir1) - \Sigma(Ki.Sio)$$
$$Mref = \Sigma(Ki.Sir2) - \Sigma(Ki.Sio)$$
$$\cdot \quad \cdot \quad \cdot \quad \cdot \quad \cdot \quad \cdot \quad \cdot$$
$$Mref = \Sigma(Ki.Sirn) - \Sigma(Ki.Sio)$$

Dans ce système d'équations, dans lequel "n" vaut 3 dans le mode de réalisation de la figure 2B et 5 dans le mode de réalisation de la figure 5A, et qui comprend donc autant d'équations que d'extensomètres, toutes les grandeurs sont connues, à l'exception des coefficients de pondération Ki des différents extensomètres qui jouent ainsi le rôle de variables.

Comme d'une part les opérations (b) et (c) sont menées de façon telle que les équations de ce système sont linéairement indépendantes les unes des autres et comme d'autre part les variables que constituent les coefficients Ki sont en nombre égal au nombre d'équations, ce système peut être résolu et ces coefficients Ki peuvent donc être déterminés.

Dans le cas où au moins trois extensomètres sont utilisés et ne subissent pas tous des contraintes de même sens, et en particulier dans le cas où le centre de gravité G de l'ensemble de la structure porteuse et du chargement de la remorque se trouve à l'extérieur du polygone formé par les extensomètres, l'un au moins des coefficients Ki peut être négatif. En variante, il est possible de prendre, en tant que valeurs d'un ou plusieurs des signaux prétraités Si, des valeurs absolues de ces signaux de manière à rendre positifs tous les coefficients Ki utilisés.

L'étape de tarage, qui fait suite à cette étape de calibration et qui dispose donc à la fois des valeurs initiales Sio des signaux Si et des coefficients de pondération Ki précédemment obtenus, consiste à déterminer la valeur $\Sigma(Ki.Sio)$ que prend la combinaison linéaire $\Sigma(Ki.Si)$ lorsque la remorque est vide.

L'étape de pesée de la remorque pleine comprend une opération consistant à recueillir les valeurs Siq que prennent les signaux Si des différents extensomètres lorsque la remorque porte le chargement à peser, et à déterminer la valeur $\Sigma(Ki.Siq)$ que prend la combinaison linéaire $\Sigma(Ki.Si)$ pour la remorque ainsi chargée.

Le procédé de l'invention peut alors se conclure par une étape d'élaboration de la donnée finale Mq, qui représente le poids du chargement de la remorque et dont la valeur est définie par la relation :

$$Mq = \Sigma(Ki.Siq) - \Sigma(Ki.Sio).$$

Dans le cas où la précision de la pesée n'est pas extrêmement critique, ou dans le cas où la position du centre de gravité de l'ensemble de la structure porteuse et du chargement ne varie pas ou seulement très peu d'un chargement à l'autre, ou encore dans le cas où la calibration doit être effectuée dans un temps aussi court que possible, l'étape de calibration précédemment décrite peut être mise en œuvre selon une variante simplifiée comprenant les opérations (a') à (d') telles que décrites ci-après.

L'opération (a') consiste à relever des valeurs à vide Sio des signaux de sortie Si que délivrent les différents extensomètres dans le cas où la remorque vide. Cette opération (a') est donc en fait identique à l'opération (a) du mode de réalisation précédemment décrit pour l'étape de calibration.

L'opération (b') consiste à placer dans la remorque la charge de référence Mref sur la verticale de la position qu'occupe le centre de gravité G de l'ensemble de la structure porteuse et du chargement dans les conditions nominales de chargement de la remorque, et à relever les valeurs en charge Sirg des signaux de sortie Si que fournissent les différents extensomètres lorsque la remorque porte cette charge de référence Mref. L'opération (b') se distingue donc des opérations (b) et (c) précédemment décrites seulement par le fait qu'elle est réalisée en plaçant la charge de référence Mref sur la verticale du centre de gravité G au lieu de la placer à la verticale de chacun des extensomètres, pris successivement.

L'opération (c') consiste à calculer un facteur normatif K dont la valeur est définie par le quotient :

$$K = Mref \; / (\Sigma(Sirg) - \Sigma(Sio)).$$

Et l'opération (d') consiste à utiliser le facteur normatif K comme coefficient de pondération commun pour tous les extensomètres, c'est-à-dire, en d'autres termes, à utiliser la grandeur K.$\Sigma$(Si) en tant que combinaison linéaire dans l'unité de traitement 4.

Dans ces conditions, l'étape de pesée de la remorque pleine comprend, outre l'opération consistant à recueillir les valeurs Siq que prennent les signaux Si des différents extensomètres lorsque la remorque porte le chargement à peser, l'opération qui consiste à déterminer la valeur K.$\Sigma$(Siq) que prend la combinaison linaire K.$\Sigma$(Si) pour la remorque ainsi chargée.

L'étape d'élaboration de la donnée finale Mq peut alors être exécutée en utilisant la relation :

$$Mq = K.\Sigma(Siq) - K.\Sigma(Sio).$$

## Revendications

**1.** Remorque dotée d'une structure porteuse (1) comprenant une flèche (10) et au moins un premier essieu (11), et conçue pour transporter un chargement présentant un centre de gravité (G),

cette remorque étant **caractérisée en ce qu'**elle comprend

• au moins deux extensomètres (21-25),
• des liaisons (31-33) en nombre égal au nombre d'extensomètres, chacune desdites liaisons comprenant un circuit électronique d'amplification à gain ajustable et de décalage d'offset et
• une unité (4) de traitement de signaux constituée d'un calculateur et comprenant en outre en étage d'entrée doté d'un convertisseur analogique/numérique et d'un multiplexeur , ladite unité de traitement (4) étant reliée aux extensomètres (21-25) par les liaisons respectives (31-33), et

**en ce que** les extensomètres (21-25) sont directement disposés sur la structure (1) et occupent des positions dont les projections verticales dans un plan horizontal forment un repère barycentrique pour la projection verticale, dans ce plan horizontal, du centre de gravité (G) de l'ensemble de la structure porteuse (1) et du chargement, et

**en ce que** les extensomètres (21-25) sont conçus pour délivrer des signaux bruts (s1-s3) destinés à être traités par lesdites liaisons (31-33) pour y être transformés en signaux de sortie (S1-S3) et fournis à l'unité de traitement (4), chaque signal de sortie étant représentatif d'une déformation de la structure (1) pouvant consister en un allongement ou une compression élastiques dans des conditions données de chargement ou d'absence de chargement de la remorque, et

**en ce que** ladite unité de traitement (4) est conçue pour recevoir, en provenance des différents extensomètres (21-25), lesdits signaux de sortie (S1-S3), et

**en ce que** ladite unité de traitement (4) est conçue

• soit pour calculer des coefficients de pondération (Ki) et les associer à chaque signal de sortie (S1-S3), de manière à élaborer une combinaison linéaire dans laquelle lesdits coefficients de pondération (Ki) sont représentatifs de la position des extensomètres dans le repère barycentrique de l'extensomètre correspondant ;
• soit pour calculer un coefficient de pondération commun K pour tous les extensomètres et l'associer à la somme des signaux de sortie (S1-S3), de manière à élaborer une combinaison linéaire dans laquelle ce coefficient commun K est représentatif de la position du centre de gravité G de l'ensemble de la structure porteuse (1) et du chargement ;

**en ce que** ladite unité de traitement (4) est conçue pour fournir, à partir de cette combinaison linéaire ou de plusieurs valeurs de cette combinaison linéaire, une donnée (Mq) représentative du poids de la remorque et / ou du chargement..

**2.** Remorque suivant la revendication 1, **caractérisée en ce qu'**elle comprend deux extensomètres (21, 22) dont les projections dans le plan horizontal sont alignées sur la projection du centre de gravité (G) de l'ensemble de la structure porteuse et du chargement, et disposées de part et d'autre de la projection de ce centre de gravité (G).

3. Remorque suivant la revendication 1, **caractérisée en ce qu'**elle comprend au moins trois extensomètres (21-23).

4. Remorque suivant l'une quelconque des revendications précédentes, **caractérisée en ce que** l'un au moins (21) des extensomètres est disposé sur la flèche (10) de cette remorque.

5. Remorque suivant l'une quelconque des revendications précédentes, **caractérisée en ce que** deux au moins des extensomètres (22, 23) sont disposés chacun sur un essieu (11) de cette remorque.

6. Remorque suivant l'une quelconque des revendications précédentes, **caractérisée en ce que** le signal de sortie (s1-s3) de chaque extensomètre (21-23) est un signal analogique, **en ce que** le circuit électronique de chacune desdites liaisons (31-33) est un circuit analogique, et **en ce que** ladite unité de traitement (4) comprend un calculateur relié à chaque circuit analogique par un étage d'entrée doté d'un convertisseur analogique / numérique.

7. Procédé de pesée d'un chargement porté par une remorque telle que définie selon l'une quelconque des revendications précédentes,

   **caractérisé en ce qu'**il comprend :

   • une étape préalable de calibration,
   • une étape de tarage,
   • une étape de pesée de la remorque pleine, et
   • une étape d'élaboration d'une donnée finale (Mq) représentative du poids du chargement, et

   **en ce que** l'étape de calibration comprend :

   • au moins une opération consistant en la réception par l'unité de traitement (4) des lesdits signaux de sortie (S1-S3) en provenance des différents extensomètres (21-25), et
   • au moins une opération réalisée par l'unité de traitement (4) consistant à

   ∘ calculer des coefficients de pondération (Ki) et les associer à chaque signal de sortie (S1-S3), de manière à élaborer une combinaison linéaire dans laquelle lesdits coefficients de pondération (Ki) sont représentatifs de la position dans le repère barycentrique de l'extensomètre correspondant ; ou
   ∘ calculer un coefficient de pondération commun K pour tous les extensomètres et l'associer à la somme des signaux de sortie (S1-S3), de manière à élaborer une combinaison linéaire dans laquelle ce coefficient commun K est représentatif de la position du centre de gravité G de l'ensemble de la structure porteuse (1) et du chargement; et

   **en ce que** l'étape de tarage comprend au moins une opération consistant à déterminer une première valeur $(\sum(Ki.Sio))$ de ladite combinaison linéaire, obtenue pour la remorque vide,
   **en ce que** l'étape de pesée de la remorque pleine comprend au moins une opération consistant à déterminer une deuxième valeur $(\sum(Ki.Siq))$ de ladite combinaison linéaire, obtenue pour la remorque avec son chargement, et
   **en ce que** l'étape d'élaboration de la donnée finale (Mq) comprend au moins une opération consistant à fournir, comme représentative du poids du chargement, la différence $(\sum(Ki.Siq)-\sum(Ki.Sio))$ entre la deuxième valeur et la première valeur de ladite combinaison linéaire.

8. Procédé de pesée selon la revendication 7, **caractérisé en ce que** ladite étape de calibration comprend les opérations consistant à :

   (a) relever des valeurs initiales (Sio) des différents signaux de sortie des extensomètres, obtenues pour la remorque vide ;
   (b) placer dans la remorque, sur ou à proximité de la verticale d'un extensomètre, une charge de référence (Mref) et relever les valeurs (Sir1) des différents signaux de sortie des extensomètres, obtenues pour cette position de la charge de référence (Mref) ;
   (c) répéter l'opération (b) pour chaque extensomètre ;
   (d) résoudre un système d'équations comprenant autant d'équations que d'extensomètres, les différentes équations correspondant aux différentes positions de la charge de référence (Mref), chaque équation assimilant à cette charge de référence (Mref) la différence $(\sum(Ki.Sirl)-\sum(Ki.Sio))$ entre deux combinaisons linéaires dont la première est obtenue avec la charge de référence (Mref) et dont la seconde est obtenue pour la remorque vide, chaque combinaison linéaire utilisant, en tant que variables à déterminer, les coefficients de pondération (Ki) des différents extensomètres (21-23), et étant formée par la somme des produits des coefficients de pondération des différents extensomètres par les valeurs respectives des différents signaux de sortie (Sio, Sir1, Sir2, Sir3) de ces extensomètres (21-23).

9. Procédé de pesée selon la revendication 7, **caractérisé en ce que** ladite étape de calibration comprend les opérations consistant à :

(a') relever des valeurs à vide (Sio) des différents signaux de sortie des extensomètres (21-23), obtenus pour la remorque vide;

(b') placer dans la remorque une charge de référence (Mref) sur la verticale de la position qu'occupe le centre de gravité (G) de l'ensemble de la structure porteuse et du chargement dans les conditions nominales de chargement de la remorque, et relever les valeurs en charge (Sirg) des différents signaux de sortie des extensomètres (21-23), obtenus avec cette charge de référence (Mref) ;

(c') calculer, en tant que facteur normatif (K), le quotient $(Mref/(\sum(Sirg)-\sum(Sio)))$ de la charge de référence (Mref) par la différence entre la somme des valeurs en charge $(\sum(Sirg))$ des signaux de sortie des extensomètres (21-23) et la somme des valeurs à vide $(\sum(Sio))$ des signaux de sortie de ces extensomètres (21-23) ; et

(d') adopter, comme représentant chacune des première et deuxième valeurs de ladite combinaison linéaire, le produit $(K.\sum(Sio), K.\sum(Siq))$, par le facteur normatif (K), de la somme des valeurs des signaux de sortie des extensomètres, respectivement obtenus pour la remorque vide et pour la remorque avec son chargement.

## Patentansprüche

1. Anhänger, der mit einer tragenden Struktur (1) ausgestattet ist, die eine Zuggabel (10) und wenigstens eine erste Achse (11) umfasst, und dafür eingerichtet ist, eine Ladung zu transportieren, die einen Schwerpunkt (G) aufweist, wobei dieser Anhänger **dadurch gekennzeichnet ist, dass** er umfasst:

• wenigstens zwei Extensometer (21-25),
• Verbindungen (31-33), deren Anzahl gleich der Anzahl der Extensometer ist, wobei jede Verbindung eine elektronische Verstärkungsschaltung mit einstellbarem Verstärkungsfaktor und Offsetverschiebung umfasst, und
• eine Einheit (4) zur Signalverarbeitung, die aus einem Rechner besteht und außerdem eine Eingangsstufe umfasst, die mit einem Analog-Digital-Umsetzer und einem Multiplexer ausgestattet ist, wobei die Verarbeitungseinheit (4) mit den Extensometern (21-25) über die Verbindungen (31-33) verbunden ist, und

dadurch, dass die Extensometer (21-25) direkt auf der Struktur (1) angeordnet sind und Positionen einnehmen, deren vertikale Projektionen auf eine horizontale Ebene ein baryzentrisches Koordinatensystem für die vertikale Projektion des Schwerpunkts (G) der aus der tragenden Struktur (1) und der Ladung bestehenden Gesamtheit auf diese horizontale Ebene bilden, und

dadurch, dass die Extensometer (21-25) dafür eingerichtet sind, Rohsignale (s1-s3) zu liefern, die dazu bestimmt sind, von den Verbindungen (31-33) verarbeitet zu werden, um hier in Ausgangssignale (S1-S3) umgewandelt und der Verarbeitungseinheit (4) zugeführt zu werden, wobei jedes Ausgangssignal für eine Verformung der Struktur (1) repräsentativ ist, die in einer elastischen Dehnung oder Stauchung unter gegebenen Bedingungen der Ladung oder des Fehlens einer Ladung des Anhängers bestehen kann, und

dadurch, dass die Verarbeitungseinheit (4) dafür eingerichtet ist, von den verschiedenen Extensometern (21-25) die Ausgangssignale (S1-S3) zu empfangen, und

dadurch, dass die Verarbeitungseinheit (4) dafür eingerichtet ist,

• entweder Gewichtungskoeffizienten (Ki) zu berechnen und sie den einzelnen Ausgangssignalen (S1-S3) zuzuordnen, um eine Linearkombination zu bilden, in welcher die Gewichtungskoeffizienten (Ki) für die Position der Extensometer in dem baryzentrischen Koordinatensystem des entsprechenden Extensometers repräsentativ sind;
• oder einen gemeinsamen Gewichtungskoeffizienten K für alle Extensometer zu berechnen und ihn der Summe der Ausgangssignale (S1-S3) zuzuordnen, um eine Linearkombination zu bilden, in welcher dieser gemeinsame Koeffizient K für die Position des Schwerpunktes G der aus der tragenden Struktur (1) und der Ladung bestehenden Gesamtheit repräsentativ ist;

dadurch, dass die Verarbeitungseinheit (4) dafür eingerichtet ist, aus dieser Linearkombination oder aus mehreren Werten dieser Linearkombination eine Größe (Mq) zu berechnen, die für das Gewicht des Anhängers und/oder der Ladung repräsentativ ist.

2. Anhänger nach Anspruch 1, **dadurch gekennzeichnet, dass** er zwei Extensometer (21, 22) umfasst, deren Projektionen auf die horizontale Ebene bezüglich der Projektion des Schwerpunktes (G) der aus der tragenden Struktur und der Ladung bestehenden Gesamtheit ausgerichtet und beiderseits der Projektion dieses Schwerpunktes (G) angeordnet sind.

**3.** Anhänger nach Anspruch 1, **dadurch gekennzeichnet, dass** er wenigstens drei Extensometer (21-23) umfasst.

**4.** Anhänger nach einem der vorhergehenden Ansprüche, **dadurch gekennzeichnet, dass** wenigstens eines (21) der Extensometer auf der Zuggabel (10) dieses Anhängers angeordnet ist.

**5.** Anhänger nach einem der vorhergehenden Ansprüche, **dadurch gekennzeichnet, dass** wenigstens zwei der Extensometer (22-23) jeweils auf einer Achse (11) dieses Anhängers angeordnet sind.

**6.** Anhänger nach einem der vorhergehenden Ansprüche, **dadurch gekennzeichnet, dass** das Ausgangssignal (s1-s3) jedes Extensometers (21-23) ein Analogsignal ist, dadurch, dass die elektronische Schaltung jeder der Verbindungen (31-33) eine analoge Schaltung ist, und dadurch, dass die Verarbeitungseinheit (4) einen Rechner umfasst, der mit jeder analogen Schaltung durch eine Eingangsstufe verbunden ist, die mit einem Analog-Digital-Umsetzer ausgestattet ist.

**7.** Verfahren zum Wiegen einer Ladung, die von einem Anhänger, wie gemäß einem der vorhergehenden Ansprüche definiert, getragen wird,
**dadurch gekennzeichnet, dass** es umfasst:

• einen vorausgehenden Schritt der Kalibrierung,
• einen Schritt der Tarierung,
• einen Schritt des Wiegens des vollen Anhängers und
• einen Schritt der Ermittlung einer endgültigen Größe (Mq), die für das Gewicht der Ladung repräsentativ ist, und

dadurch, dass der Schritt der Kalibrierung umfasst:

• wenigstens einen Arbeitsschritt, der im Empfang der von den verschiedenen Extensometern (21-25) stammenden Ausgangssignale (S1-S3) durch die Verarbeitungseinheit (4) besteht, und
• wenigstens einen Arbeitsschritt, der von der Verarbeitungseinheit (4) durchgeführt wird und darin besteht,

∘ Gewichtungskoeffizienten (Ki) zu berechnen und sie den einzelnen Ausgangssignalen (S1-S3) zuzuordnen, um eine Linearkombination zu bilden, in welcher die Gewichtungskoeffizienten (Ki) für die Position des entsprechenden Extensometers in dem baryzentrischen Koordinatensystem repräsentativ sind; oder
∘ einen gemeinsamen Gewichtungskoeffizienten K für alle Extensometer zu berechnen und ihn der Summe der Ausgangssignale (S1-S3) zuzuordnen, um eine Linearkombination zu bilden, in welcher dieser gemeinsame Koeffizient K für die Position des Schwerpunktes G der aus der tragenden Struktur (1) und der Ladung bestehenden Gesamtheit repräsentativ ist; und

dadurch, dass der Schritt der Tarierung wenigstens einen Arbeitsschritt umfasst, der darin besteht, einen ersten Wert ($\sum$(Ki.Sio) der Linearkombination zu bestimmen, der für den leeren Anhänger erhalten wird, dadurch, dass der Schritt des Wiegens des vollen Anhängers wenigstens einen Arbeitsschritt umfasst, der darin besteht, einen zweiten Wert ($\sum$(Ki.Siq) der Linearkombination zu bestimmen, der für den Anhänger mit seiner Ladung erhalten wird, und dadurch, dass der Schritt der Ermittlung der endgültigen Größe (Mq) wenigstens einen Arbeitsschritt umfasst, der darin besteht, die Differenz ($\sum$(Ki.Siq) - $\sum$(Ki.Sio)) zwischen dem zweiten Wert und dem ersten Wert der Linearkombination als für das Gewicht der Ladung repräsentative Größe zu liefern.

**8.** Verfahren zum Wiegen nach Anspruch 7, **dadurch gekennzeichnet, dass** der Schritt der Kalibrierung die folgenden Arbeitsschritte umfasst:

(a) Ermitteln von Anfangswerten (Sio) der verschiedenen Ausgangssignale der Extensometer, die für den leeren Anhänger erhalten wurden;
(b) Anbringen einer Referenzlast (Mref) im Anhänger auf oder in der Nähe der Senkrechten durch ein Extensometer und Ermitteln der Werte (Sir1) der verschiedenen Ausgangssignale der Extensometer, die für diese Position der Referenzlast (Mref) erhalten wurden;
(c) Wiederholen des Arbeitsschrittes (b) für jedes Extensometer;
(d) Lösen eines Gleichungssystems, das ebenso viele Gleichungen umfasst, wie Extensometer vorhanden sind, wobei die verschiedenen Gleichungen den verschiedenen Positionen der Referenzlast (Mref) entsprechen, wobei jede Gleichung die Differenz ($\sum$(Ki.Sir1) - $\sum$(Ki.Sio)) zwischen zwei Linearkombinationen, von denen die erste mit der Referenzlast (Mref) erhalten wird und von denen die zweite für den leeren Anhänger erhalten wird, mit dieser Referenzlast (Mref) gleichsetzt, wobei jede Linearkombination als zu bestimmende Variablen die Gewichtungskoeffizienten (Ki) der verschiedenen Extensometer (21-23) verwendet und durch die Summe der Produkte der Gewichtungskoeffizienten der verschiedenen Extensometer mit den jeweiligen Werten der verschiedenen Ausgangssignale (Sio, Sir1, Sir2, Sir3) dieser Extensometer (21-23) gebildet wird.

9. Verfahren zum Wiegen nach Anspruch 7, **dadurch gekennzeichnet, dass** der Schritt der Kalibrierung die folgenden Arbeitsschritte umfasst:

(a') Ermitteln von Leerzustandswerten (Sio) der verschiedenen Ausgangssignale der Extensometer (21-23), die für den leeren Anhänger erhalten wurden;

(b') Anbringen einer Referenzlast (Mref) im Anhänger auf der Senkrechten durch die Position, welche der Schwerpunkt (G) der aus der tragenden Struktur und der Ladung bestehenden Gesamtheit unter Nennbedingungen der Beladung des Anhängers einnimmt, und Ermitteln der Werte unter Last (Sirg) der verschiedenen Ausgangssignale der Extensometer (21-23), die mit dieser Referenzlast (Mref) erhalten wurden;

(c') Berechnen, als Normierungsfaktor (K), des Quotienten (Mref/($\sum$(Sirg) - $\sum$(Sio))) der Referenzlast (Mref) und der Differenz zwischen der Summe der Werte unter Last ($\sum$(Sirg)) der Ausgangssignale der Extensometer (21-23) und der Summe der Werte im Leerzustand ($\sum$(Sio)) der Ausgangssignale dieser Extensometer (21-23); und (d') Verwenden, als den ersten und den zweiten Wert der Linearkombination darstellend, des Produktes (K.$\sum$(Sio), K.$\sum$(Siq)) der Summe der Werte der Ausgangssignale der Extensometer, die für den leeren Anhänger bzw. für den Anhänger mit seiner Ladung erhalten wurden, mit dem Normierungsfaktor (K).

**Claims**

1. Trailer provided with a supporting structure (1) comprising a hitch tongue (10) and at least one first axle (11), and designed to transport a cargo having a centre of gravity (G),

this trailer being **characterized in that** it comprises

• at least two extensometers (21-25),
• links (31-33), the number of which equals the number of extensometers, each of said links comprising an adjustable gain amplification and offset shift electronic circuit and
• a signal processing unit (4) composed of a computer and also comprising an input stage provided with an analogue/digital converter and a multiplexer, said processing unit (4) being linked to the extensometers (21-25) by the respective links (31-33), and

**in that** the extensometers (21-25) are directly disposed on the structure (1) and occupy positions whose vertical projections in a horizontal plane form a barycentric reference frame for the vertical projection, in this horizontal plane, of the centre of gravity (G) of all of the supporting structure (1) and the cargo, and
**in that** the extensometers (21-25) are designed to deliver raw signals (s1-s3) intended to be processed by said links (31-33) to be transformed therein into output signals (S1-S3) and supplied to the processing unit (4), each output signal being representative of a deformation of the structure (1) that can consist of an elastic elongation or compression in given conditions of loading or absence of loading of the trailer, and
**in that** said processing unit (4) is designed to receive, from the different extensometers (21-25), said output signals (S1-S3), and
**in that** said processing unit (4) is designed

• either to calculate weighting coefficients (Ki) and associate them with each output signal (S1-S3), so as to develop a linear combination in which said weighting coefficients (Ki) are representative of the position of the extensometers in the barycentric reference frame of the corresponding extensometer;
• or to calculate a common weighting coefficient K for all the extensometers and associate it with the sum of the output signals (S1-S3), so as to develop a linear combination in which this common coefficient K is representative of the position of the centre of gravity G of all of the supporting structure (1) and of the cargo;

**in that** said processing unit (4) is designed to supply, from this linear combination or from several values of this linear combination, a datum (Mq) representative of the weight of the trailer and/or of the cargo.

2. Trailer according to Claim 1, **characterized in that** it comprises two extensometers (21, 22) whose projections in the horizontal plane are aligned on the projection of the centre of gravity (G) of all of the supporting structure and of the cargo, and disposed on either side of the projection of this centre of gravity (G) .

3. Trailer according to Claim 1, **characterized in that** it comprises at least three extensometers (21-23).

4. Trailer according to any one of the preceding claims, **characterized in that** at least one (21) of the extensometers is disposed on the hitch tongue (10) of that trailer.

5. Trailer according to any one of the preceding claims, **characterized in that** at least two of the extensometers (22, 23) are each disposed on an axle (11) of this trailer.

6. Trailer according to any one of the preceding claims, **characterized in that** the output signal (s1-s3) of each extensometer (21-23) is an analogue signal, **in that** the electronic circuit of each of said links (31-33) is an analogue circuit, and **in that** said processing unit (4) comprises a computer linked to each analogue circuit by an input stage provided with an analogue-digital converter.

7. Method for weighing a cargo borne by a trailer as defined according to any one of the preceding claims,

   **characterized in that** it comprises:

   • a preliminary calibration step,
   • a calibration adjustment step,
   • a step of weighing of the full trailer, and
   • a step of development of a final datum (Mq) representative of the weight of the cargo, and

   **in that** the calibration step comprises:

   • at least one operation consisting of the reception by the processing unit (4) of said output signals (S1-S3) from the different extensometers (21-25), and
   • at least one operation performed by the processing unit (4) consisting in

      o calculating weighting coefficients (Ki) and associating them with each output signal (S1-S3), so as to develop a linear combination in which said weighting coefficients (Ki) are representative of the position in the barycentric reference frame of the corresponding extensometer; or
      o calculating a common weighting coefficient K for all the extensometers and associating it with the sum of the output signals (S1-S3), so as to develop a linear combination in which this common coefficient K is representative of the position of the centre of gravity G of all of the supporting structure (1) and of the cargo; and

   **in that** the calibration adjustment step comprises at least one operation consisting in determining a first value ($\sum(Ki.Sio)$) of said linear combination, obtained for the empty trailer,
   **in that** the step of weighing of the full trailer comprises at least one operation consisting in determining a second value ($E(Ki.Siq)$) of said linear combination, obtained for the trailer with its cargo, and
   **in that** the step of development of the final datum (Mq) comprises at least one operation consisting in supplying, as representative of the weight of the cargo, the difference ($\sum(Ki.Siq)-\sum(Ki.Sio)$) between the second value and the first value of said linear combination.

8. Weighing method according to Claim 7, **characterized in that** said calibration step comprises the operations consisting in:

   (a) recording initial values (Sio) of the different output signals of the extensometers, obtained for the empty trailer;
   (b) placing, in the trailer, on or in proximity to the vertical from an extensometer, a reference load (Mref) and recording the values (Sir1) of the different output signals of the extensometers, obtained for this position of the reference load (Mref);
   (c) repeating the operation (b) for each extensometer;
   (d) solving a system of equations comprising as many equations as there are extensometers, the different equations corresponding to the different positions of the reference load (Mref), each equation comparing to this reference load (Mref) the difference ($\sum(Ki.Sir1)-(E(Ki.Sio))$) between two linear combinations, the first of which is obtained with the reference load (Mref) and the second of which is obtained with the empty trailer, each linear combination using, as variables to be determined, the weighting coefficients (Ki) of the different extensometers (21-23), and being formed by the sum of the products of the weighting coefficients of the different extensometers by the respective values of the different output signals (Sio, Sir1, Sir2, Sir3) of these extensometers (21-23).

9. Weighing method according to Claim 7, **characterized in that** said calibration step comprises the operations consisting in:

   (a') recording no-load values (Sio) of the different output signals of the extensometers (21-23), obtained for the empty trailer;

(b') placing in the trailer a reference load (Mref) on the vertical of the position occupied by the centre of gravity (G) of all of the supporting structure and of the cargo in the nominal trailer loading conditions, and recording the load values (Sirg) of the different output signals of the extensometers (21-23), obtained with this reference load (Mref);

(c') calculating, as normative factor (K), the quotient $(Mref/(\sum(Sirg)-\sum(Sio)))$ of the reference load (Mref) by the difference between the sum of the load values $(E(Sirg))$ of the output signals of the extensometers (21-23) and the sum of the no-load values $(\sum(Sio))$ of the output signals of these extensometers (21-23); and

(d') adopting, as representing each of the first and second values of said linear combination, the product $(K.\sum(Sio),K.\sum(Siq))$, by the normative factor (K), of the sum of the values of the output signals of the extensometers, respectively obtained for the empty trailer and for the trailer with its cargo.

Fig. 1

Fig. 2A

Fig. 2B

Fig. 3

Fig. 4A

Fig. 4B

Fig. 4C

Fig. 5A

Fig. 5B

## RÉFÉRENCES CITÉES DANS LA DESCRIPTION

**Documents brevets cités dans la description**

- FR 2292958

- US 5410109 A